# EUROPÄISCHE PATENTANMELDUNG

(11) **EP 2 710 938 A2**
(43) Veröffentlichungstag der Anmeldung: **26.03.2014**
(21) Anmeldenummer: 13004559.4
(22) Anmeldetag: 18.09.2013
(51) Int. Cl.: A47J 31/42, A47J 42/38

(54) **Mahlwerk**

(30) Priorität: 20.09.2012 DE 102012018573; 17.10.2012 DE 102012020331; 05.06.2013 DE 102013009336
(71) Anmelder: Keller, Fritz, 80638 München (DE)
(72) Erfinder: Keller, Fritz, 80638 München (DE)
(74) Vertreter: Patentanwaltskanzlei Liermann-Castell & Kollegen

(57) **Zusammenfassung**

Die Erfindung betrifft ein Mahlwerk (1), das einen Ventilator (7, 9) aufweist, der es ermöglicht Geruchsstoffe aus dem Mahlwerk (1) abzuziehen.

## Beschreibung

Die Erfindung betrifft ein Mahlwerk insbesondere für Lebensmittel.

Derartige Mahlwerke haben in der Regel einen Vorratsbehälter mit Mahlgut, eine Mühle, die beispielweise eine Walzenmühle sein kann, und einen Auffangbehälter für das gemahlene Produkt.

Der Erfindung liegt die Aufgabe zu Grunde, ein derartiges Mahlwerk weiterzubilden.

Diese Aufgabe wird mit einem gattungsgemäßen Mahlwerk gelöst, das einen Ventilator aufweist.

Der Ventilator ermöglicht es, beim Mahlvorgang entstehende Geruchsstoffe aus dem Mahlwerk heraus zu fördern, um die beim Mahlen entstehenden Geruchsstoffe in Räume oder auch in den öffentlichen Raum zu leiten.

Während bekannte Mahlwerke möglichst geschlossen gehalten werden, um die beim Mahlen entstehenden Geruchsstoffe im Mahlwerk zu halten oder in das gemahlene Produkt zu überführen, liegt der Erfindung die Aufgabe zu Grunde, Geruchsstoffe aus dem Mahlwerk zu entnehmen und zu nutzen. Diese Aufgabe wird erfindungsgemäß mit einem Ventilator gelöst, der in das Mahlwerk integriert sein kann oder mit dem Mahlwerk in Verbindung steht. Dieser Ventilator erlaubt es entweder Geruchsstoffe aus dem Mahlwerk abzusaugen oder einen Luftstrom zum Mahlwerk zu führen, der Geruchsstoffe aus dem Mahlwerk herausführt.

Eine vorteilhafte Ausführungsform sieht vor, dass das Mahlwerk einen Mahlgutvorratsbehälter aufweist und dass der Ventilator einen Luftzug durch diesen Vorratsbehälter erzeugt. Ein Mahlgutvorratsbehälter ist ein Behälter in dem das ungemahlene Lebensmittel vor dem Mahlen aufbewahrt wird. Dieser Luftzug kann entweder Geruchsstoffe des ungemahlenen Mahlgutes aufnehmen und/oder auch die beim Mahlen entstehenden Geruchsstoffe. Je nach Ausführungsform können sogar die Geruchsstoffe des gemahlenen Gutes mit dem Luftzug an einen bestimmten Ort gefördert werden.

Dieser Luftzug kann Luft in das Mahlwerk, den Vorratsbehälter oder den Behälter mit dem gemahlenen Gut drücken oder er kann Luft absaugen. Beim Absaugen von Luft aus dem Vorratsbehälter entsteht ein einfacher Aufbau, bei dem der Unterdruck im Vorratsbehälter je nach Ausführungsform des Mahlwerkes auch Geruchsstoffe aus dem Mahlwerk und gegebenenfalls sogar dem darunter liegenden Mahlgutbehälter absaugt. Um den Aufbau der Einrichtung zu vereinfachen, kann sogar in der Nähe der Absaugstelle eine Öffnung für das Zuströmen von Luft vorgesehen sein. Die durch die Luftströmung entstehenden Verwirbelungen reichen dabei aus, Geruchstoffe in der Trägerluft aufzunehmen.

Es wird daher vorgeschlagen, dass der Ventilator vorzugsweise einen Luftzug oberhalb der Mühle des Mahlwerks erzeugt. Dieser Luftzug kann als Überdruck die Geruchsstoffe aus dem Mahlwerk austreiben oder als Unterdruck die Geruchsstoffe absaugen. Die Anordnung oberhalb der Mahlwerks ermöglicht einen Aufbau, bei dem ein Zusatzmodul zwischen Mahlwerk und Vorratsbehälter oder auf oder an dem Vorratsbehälter vorgesehen ist.

Besonders vorteilhaft ist es, wenn der Ventilator einen Luftzug durch das Mahlwerk hindurch erzeugt. Dabei kann je nach Anordnung des Ventilators die Luft durch das Mahlwerk gesaugt oder geblasen werden.

Insbesondere um das Mahlwerk zur Erzeugung von Geruchsstoffen zu verwenden, auch wenn kein gemahlenes Gut benötigt wird, wird vorgesehen, dass das Mahlwerk einen Bypass aufweist. Über diesen Bypass kann das gemahlene Gut in den Vorratsbehälter zurückgefördert werden, sodass einerseits das gemahlene Gut besser Geruchsstoffe abgibt und andererseits das Mahlwerk auch nur für die Erzeugung von Geruchsstoffen betrieben werden kann.

Eine vorteilhafte Ausführungsvariante sieht vor, dass das Mahlwerk einen Feststoffabscheider zur Trennung von Mahlgut und Luft aufweist. Vorzugsweise wird dem Ventilator ein Feststoffabscheider nachgeschaltet. Ein derartiger Feststoffabscheider kann beispielsweise ein Zyklon oder ein Filter sein. Dadurch wird verhindert, dass mit den Geruchsstoffen auch gemahlenes Gut abgesaugt wird. Insbesondere die in einem Zyklon abgeschiedenen Teilchen können vorzugsweise in den Mahlgutvorratsbehälter geleitet werden oder direkt dem gemahlenen Gut zugeführt werden.

Eine besondere Ausführungsvariante sieht vor, dass das Mahlwerk einen Motor aufweist und der Luftstrom an der Außenseite des Motors entlang geführt wird. Damit der Luftstrom nicht mit vom Motor kommenden Gerüchen vermischt wird, wird der Motor vorzugsweise gekapselt oder der Luftstrom wird so über einen Bereich der Außenseite des Motors geführt, dass keine Verbindung zum Inneren des Motors oder zur Wellenlagerung entsteht. Der Luftstrom wird beispielsweise über Kühlrippen des Motors geführt oder über einen sauberen Gehäusebereich. Dadurch wird erreicht, dass der Motor gekühlt und die Luft erwärmt wird.

Die erwärmte Luft kann als Teilstrom über den Motor geführt werden, um mit dem für die Geruchstoffe benötigten Ventilator auch den Motor zu kühlen, ohne den über den Motor geführten Teilstrom durch das Lebensmittel zu führen.

Es kann aber auch beispielsweise vom Motor erwärmte Luft durch das Lebensmittel geführt werden, um eine stärkere Geruchstoffaufnahme zu ermöglichen.

Der Luftstrom kann erst über das Mahlgut und dann über den Motor oder erst über den Motor und dann über das Mahlgut geführt werden. Außerdem kann der Luftstrom in einem Bypass über den Motor geführt werden.

Eine einfache Ausführungsvariante sieht einen Mahlgutvorratsbehälter vor, der auf ein Mahlwerk aufsetzbar oder aufschraubbar ist und, vorzugsweise an einer Bodenfläche, einen Ventilator aufweist. Damit kann auf eine herkömmliche Kaffeemaschine oder ein herkömmliches Mahlwerk einfach ein Mahlgutvorratsbehälter aufgeschraubt werden, von dem die Kaffeebohnen in die Maschine fallen, wobei der Ventilator, vorzugsweise in Fallrichtung der Bohnen, einen Luftstrom erzeugt.

Die der Erfindung zugrunde liegende Aufgabe wird auch von einem Aufsatz, insbesondere für ein derartiges Mahlwerk gelöst, der einen Mahlwerkanschluss, vorzugsweise als Gewinde, für eine Verbindung zu einem Mahlwerk und einen Vorratsbehälteranschluss, vorzugsweise als Gewinde, für eine Verbindung zu einem Vorratsbehälter sowie einen Ventilator und einen Luftauslass zur Erzeugung eines Luftstromes im Aufsatz aufweist. Dieser Aufsatz kann auf eine herkömmliche Kaffeemaschine oder ein herkömmliches Mahlwerk einfach aufgeschraubt werden, um zwischen Vorratsbehälter und Mahlwerk einen Luftstrom zu erzeugen. Dieser Luftstrom fließt vorzugsweise quer zur Fallrichtung der Kaffeebohnen.

Die der Erfindung zugrunde liegende Aufgabe wird ferner mit einer Kaffeemaschine mit einem Mahlwerk gelöst, die ein Mahlwerk mit einem Ventilator aufweist.

Vorzugsweise weist die Kaffeemaschine ein Ölspeicherelement auf, durch das der Luftstrom geführt ist. Dieser Luftstrom kann durch den Motor des Mahlwerks oder auf andere Weise erwärmt sein. Er kann durch das Lebensmittel geführt sein oder als Bypass durch das Ölspeicherelement geführt sein. Es kann aber auch nur eine Luftströmung über einen Motor, wie insbesondere den Motor des Mahlwerks, und anschließend über das Ölspeicherelement geführt werden.

Dabei ist das Ölspeicherelement vorzugsweise ein getränktes poröses Element, über das oder durch das der Luftstrom geführt wird.

Verfahrensmäßig wird die der Erfindung zugrunde liegende Aufgabe mit einem Verfahren zum Betreiben eines Mahlwerks gelöst, bei dem aus dem Mahlwerk Luft abgesaugt wird.

Dabei ist es vorteilhaft, wenn zumindest ein Teilstrom des zu mahlenden Gutes mehrmals das Mahlwerk durchläuft.

Die Erfindung ermöglicht es somit, ätherische Öle aus einem zu mahlenden Gut abzusaugen und als Geruchsstoffe zu verwenden. Dies erschließt einerseits eine effektive Verwendung von beim Mahlprozess entstehenden Geruchsstoffen und andererseits kann je nach Ausführungsform des Mahlwerkes auch das Mahlwerk geschont werden, indem aus dem Mahlwerk verklebende ätherische Öle abgesaugt werden. Dies führt dazu, dass das Mahlwerk weniger gereinigt werden muss und effektiver betrieben werden kann.

Ein Ausführungsbeispiel des erfindungsgemäßen Mahlwerks, eines einfachen Mahlgutvorratsbehälters und eines Aufsatzes sind in den Figuren dargestellt und werden im Folgenden näher beschrieben. Es zeigt:
- Figur 1: schematisch eine Ansicht eines Mahlwerkes mit zwei Möglichkeiten der Anordnung eines Ventilators,
- Figur 2: schematisch einen Mahlgutvorratsbehälter und
- Figur 3: schematisch einen Aufsatz für eine Kaffeemaschine.

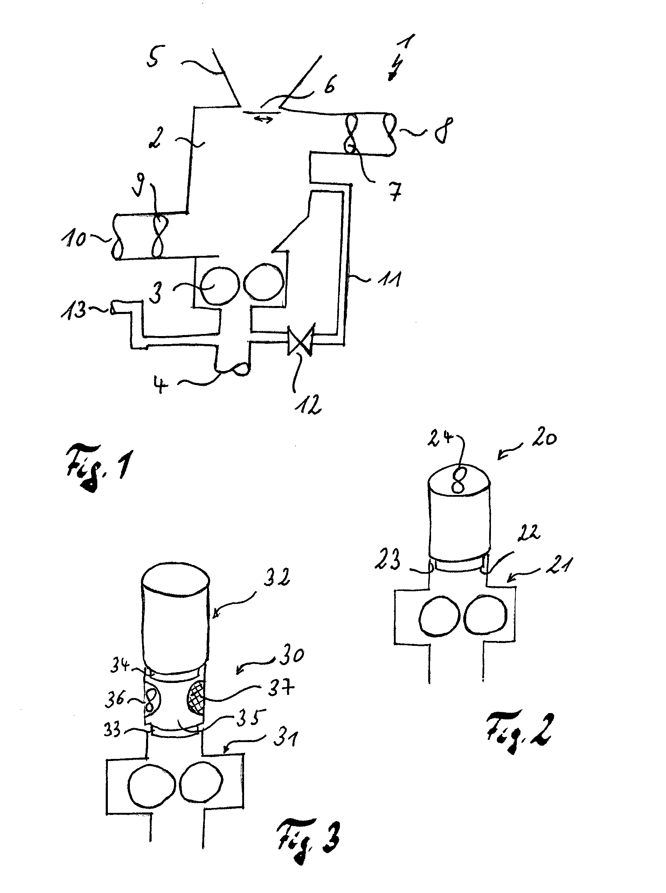

Das in Figur 1 gezeigte Mahlwerk 1 besteht aus einem Mahlgutvorratsbehälter 2 und der Mühle 3. Unterhalb der Mühle 3 ist ein Ausgang 4 für das gemahlene Gut, der in einen Mahlgutauffangbehälter (nicht gezeigt) führen kann. Über eine Schütte 5 kann Mahlgut dem Mahlgutvorratsbehälter zur Nachfüllung zugeführt werden. Zwischen Schütte 5 und Mahlgutvorratsbehälter ist ein Schieber 6 als Verschluss vorgesehen.

Der Mahlgutvorratsbehälter hat einen oberen Ventilator 7, der aus dem Mahlgutvorratsbehälter Luft absaugen kann und zum Ausgang 8 fördert. Dadurch kann oberhalb des Mahlgutes ein Luftstrom erzeugt werden, der ätherische Öle absaugt.

Das Absaugen der ätherischen Öle kann auch tiefer, beispielsweise direkt oberhalb der Mühle 3 im unteren Bereich des Mahlgutvorratsbehälters erfolgen. Dies ist in der Figur mit dem Ventilator 9 gezeigt, der Luft aus dem Vorratsbehälter 2 zum Ausgang 10 fördert.

Die Ventilatoren 7 und 9 können kumulativ oder alternativ vorgesehen werden.

Eine weitere Variante zur Anordnung eines Ventilators besteht darin, dass der Ventilator im Bereich der Schütte 5 angeordnet wird. Der Ventilator kann beispielsweise in einen die Schütte 5 abdeckenden Deckel integriert sein. Ein derartiger Ventilator (nicht gezeigt) kann kumulativ oder alternativ zu den zuvor genannten Ventilatoren vorgesehen sein und entweder Luft in den Mahlgutsvorratsbehälter blasen oder vorzugsweise mit Aromen beladene Luft absaugen.

Über den Bypass 11 kann Mahlgut unterhalb der Mühle 3 abgesaugt werden. Hierzu wird ein Ventil 12 geöffnet, das zur Folge hat, dass ein im Mahlgutvorratsbehälter entstehender Unterdruck Mahlgut über den Bypass 11 in den Vorratsbehälter zurückfördert. Der Bypass 11 kann auch gemahlenes Gut aus einem Behälter in den Mahlgutvorratsbehälter zurückführen.

Die Ventilatoren 7 und 9 können in beliebiger Art als Gebläse oder Luftfördereinrichtung ausgebildet sein. Sie können saugen und/oder blasen. Dadurch kann auch ein herkömmliches Mahlwerk derart umgestaltet werden, dass die Geruchsstoffe entnommen werden oder das Mahlwerk durch Einblasen von Luft Geruchsstoffe abgibt. Hierzu können an unterschiedlichen Stellen im Mahlwerk Öffnungen 13 vorgesehen werden, die es ermöglichen, abgesaugte Luft nachzufördern oder in das Mahlwerk geförderte Luft mit Geruchsstoffen abzugeben.

Eine einfacher Mahlgutvorratsbehälter 20 kann auf ein Mahlwerk 21 aufgesetzt oder aufschraubt werden. Als Verbindung dient in dem in Figur 2 gezeigten Ausführungsbeispiel ein Außengewinde 22 am Mahlgutvorratsbehälter 20 und ein Innengewinde 23 am Mahlwerk 21. Ein Ventilator 24 bläst Luft aus der Bodenfläche 25 des als Blechdose ausgebildeten Mahlgutvorratsbehälters 20 und erzeugt so einen Luftstrom, der Luft aus dem Mahlwerk 21 durch den Vorratsbehälter 20 nach außen saugt.

Der in Figur 3 gezeigte Aufsatz 30 sitzt zwischen dem Mahlwerk 31 und einem Mahlgutvorratsbehälter 32. Er ist als Hülse 35 mit einem ersten Gewinde als Mahlwerksanschluss 33 als Verbindung zum Mahlwerk und einem zweiten Gewinde als Vorratsbehälteranschluss 34 als Verbindung zum Mahlgutvorratsbehälter 32 ausgebildet. In der Hülse 35 ist an einer Seite ein Ventilator 36 und dem Ventilator gegenüber liegend ein Luftausgang 37 vorgesehen. Ventilator 36 und Luftausgang 37 sind so ausgebildet, dass zwischen ihnen Kaffeebohnen (nicht gezeigt) durch die Hülse fallen können, ohne die Hülse zu verlassen oder durch den Ventilator behindert zu werden.

## Patentansprüche

1. Mahlwerk (1) insbesondere für Lebensmittel mit einer Mühle (3), ***dadurch gekennzeichnet, dass*** es einen Ventilator (7, 9) aufweist, der einen Luftstrom durch das Lebensmittel führt.

2. Mahlwerk nach Anspruch 1, ***dadurch gekennzeichnet, dass*** das Mahlwerk einen Mahlgutvorratsbehälter (2) aufweist und der Ventilator (7, 9) einen Luftzug durch diesen Vorratsbehälter (2) erzeugt.

3. Mahlwerk (1) nach Anspruch 2, ***dadurch gekennzeichnet, dass*** der Ventilator (7, 9) Luft aus dem Vorratsbehälter (2) saugt.

4. Mahlwerk (1) nach einem der vorhergehenden Ansprüche, ***dadurch gekennzeichnet, dass*** der Ventilator (7, 9) einen Luftzug oberhalb der Mühle (3) des Mahlwerks (1) erzeugt.

5. Mahlwerk (1) nach einem der vorhergehenden Ansprüche, ***dadurch gekennzeichnet, dass*** der Ventilator einen Luftzug durch die Mühle (3) des Mahlwerks (1) hindurch erzeugt.

6. Mahlwerk (1) nach einem der vorhergehenden Ansprüche, ***dadurch gekennzeichnet, dass*** Mahlwerk (1) einen Bypass (11) aufweist.

7. Mahlwerk (1) nach einem der vorhergehenden Ansprüche, ***dadurch gekennzeichnet, dass*** das Mahlwerk (1) einen Feststoffabscheider zur Trennung von Mahlgut und Luft aufweist.

8. Mahlwerk (1) nach einem der vorhergehenden Ansprüche, ***dadurch gekennzeichnet, dass*** das das Mahlwerk einen Motor aufweist und der Luftstrom an der Außenseite des Motors entlang geführt wird.

9. Mahlgutvorratsbehälter (20) insbesondere für ein Mahlwerk (21) nach einem der vorhergehenden Ansprüche, ***dadurch gekennzeichnet, dass*** er, vorzugsweise an einer Bodenfläche (25), einen Ventilator (24) aufweist.

10. Aufsatz (30) insbesondere für ein Mahlwerk (31) nach einem der vorhergehenden Ansprüche, ***dadurch gekennzeichnet, dass*** er einen Mahlwerkanschluss (33), vorzugsweise als Gewinde, für eine Verbindung zu einem Mahlwerk (31) und einen Vorratsbehälteranschluss (34), vorzugsweise als Gewinde, für eine Verbindung zu einem Vorratsbehälter (32) sowie einen Ventilator (36) und einen Luftauslass (37) zur Erzeugung eines Luftstromes im Aufsatz (30) aufweist.

11. Kaffeemaschine mit einem Mahlwerk (1) nach einem der vorhergehenden Ansprüche.

12. Kaffeemaschine nach Anspruch 11, ***dadurch gekennzeichnet, dass*** sie ein Ölspeicherelement aufweist, durch das der Luftstrom geführt ist.

13. Verfahren zum Betreiben eines Mahlwerks (1), ***dadurch gekennzeichnet, dass*** aus dem Mahlwerk Luft abgesaugt wird.

14. Verfahren nach Anspruch 11, ***dadurch gekennzeichnet, dass*** zumindest ein Teilstrom des zu mahlenden Gutes mehrmals die Mühle (3) des Mahlwerks (1) durchläuft.
